Europäisches Patentamt

European Patent Office

Office européen des brevets

(11) Veröffentlichungsnummer: **0 040 837**
**B1**

# EUROPÄISCHE PATENTSCHRIFT

(45) Veröffentlichungstag der Patentschrift:
29.08.84

(51) Int. Cl.³: **G 01 F 1/66**

(21) Anmeldenummer: 81103954.4

(22) Anmeldetag: 22.05.81

(54) **Durchfluss-Strömungsmesser mit Ultraschall.**

(30) Priorität: 28.05.80 DE 3020282

(43) Veröffentlichungstag der Anmeldung:
02.12.81 Patentblatt 81/48

(45) Bekanntmachung des Hinweises auf die Patenterteilung:
29.08.84 Patentblatt 84/35

(84) Benannte Vertragsstaaten:
AT CH FR GB IT LI NL SE

(56) Entgegenhaltungen:
US - A - 3 891 869
US - A - 3 964 308

(73) Patentinhaber: SIEMENS AKTIENGESELLSCHAFT,
Berlin und München Wittelsbacherplatz 2,
D-8000 München 2 (DE)

(72) Erfinder: Mágori, Valentin, Dipl.-Phys.,
Limburgstrasse 17, D-8000 München 90 (DE)

## Beschreibung

Die vorliegende Erfindung bezieht sich auf einen Durchfluß-Strömungsmesser, wie er im Oberbegriff des Patentanspruchs 1 angegeben ist. Eine solche Vorrichtung ist aus der Patentschrift US-A-39 64 308 bekannt.

Aus dem Stand der Technik »Flow, its Measurement and Control in Science and Industry«, Bd. 1, Teil 2, »Flow Measuring Devices«, Seite 897—915, Instrument Society of America, Pittsburgh (1974) sind eine Anzahl von mit Ultraschall arbeitenden Durchfluß-Strömungsmessern bekannt, wobei sich diese zusammenfassende Druckschrift auf viele ältere druckschriftliche Veröffentlichungen bezieht. Insbesondere die Fig. 3 (Seite 905) und 4 (Seite 907) zeigen Anordnungen mit Sende- und Empfangswandlern, deren Strahlungsrichtung schräg zur Achse der Rohrleitung gerichtet ist, in deren Innerem strömendes Medium bezüglich Geschwindigkeit und/oder strömender Menge gemessen werden soll. Alle diese Ausführungen sind derart, daß die Innenoberfläche der Rohrwandung eine Störung durch eine keilförmige Vertiefung oder einen keilförmigen Vorsprung aufweist. Solche Störungen der Rohrinnenwand sind aber sehr unerwünscht, da sie zum einen Störungen des Strömungsprofils und damit Strömungswiderstand hervorrufen und zum anderen Anlaß für Ablagerungen an dieser Stelle geben, wobei diese Ablagerungen außerdem auch noch die Ausbreitung der Ultraschall-Strahlung beeinträchtigen.

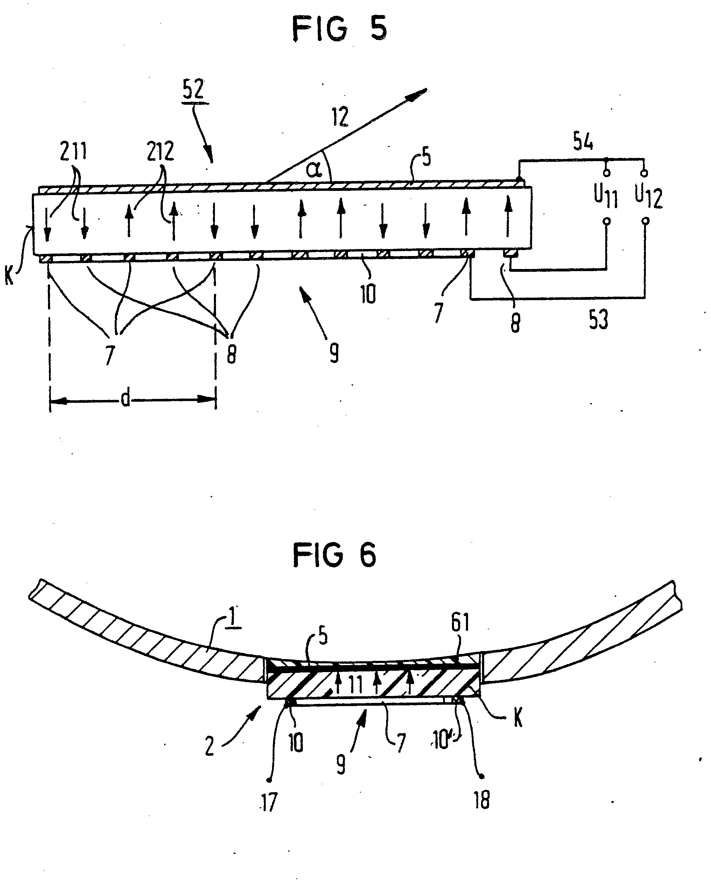

Zur Vermeidung solcher Schwierigkeiten sind Aufbauten vorgeschlagen worden, die in der obengenannten Zeitschrift in Fig. 6 (Seite 908) gezeigt sind. Dort ist eine unverändert glatte Rohrinnenwand vorhanden und die Wandler für Senden und Empfangen sind wieder mit zur Rohrachse schräggerichteter Sende- bzw. Empfangsrichtung angebracht. Dabei ist gemäß einem Ausführungsbeispiel eine Einkerbung der Außenwand der Rohrleitung vorgesehen, in der jeweilige Wandler angebracht ist. Dieser Wandler muß seine Ultraschall-Strahlung durch die Rohrwandung hindurch ausstrahlen bzw. empfangen, wobei an der Grenzfläche zwischen Rohrinnenwandung und Rohrinnenvolumen eine Brechung der sich fortpflanzenden Ultraschall-Strahlung eintritt, die im übrigen von Änderungen des Brechungsindex des in der Rohrleitung strömenden Mediums abhängt.

Eine andere Ausführungsform ist diejenige, bei der schräg in die Rohrwandung ein Übertragungskörper für die Ultraschall-Strahlung eingesetzt ist, an dessen äußerer Stirnfläche der eigentliche Wandlerkörper angebracht ist. Im Bereich der Innenwandung der Rohrleitung hat dieser Übertragungskörper eine die Rohrinnenwandung glatt fortsetzende Fläche. Bei einem derartigen Übertragungskörper tritt der bereits erwähnte Effekt der Strahlungsbrechung auf.

Eine weitere Ausführungsform ist die, in der der Wandlerkörper an einem außen an die Rohrwandung angebrachten Kopplungsblock angebracht ist, wobei ebenfalls die Brechung auftritt.

Die beiden Druckschriften US-A-3 891 869 und 3 964 308 beschreiben eine Anordnung mit Ultraschall-Wandlern, deren jeweils ebene Abstrahlfläche kreisrunden Querschnitt hat und die Oberfläche der Rohrinnenwand in Richtung der Rohrachse gesehen, d. h. im wesentlichen, fortsetzen kann. Diese Wandler haben, damit sie Ultraschall-Strahlung in anderer als senkrechter Richtung abstrahlen können, einen solchen konstruktiven Aufbau, daß sie bei einer bestimmten ausgewählten Frequenz der elektrischen Anregungsspannung im wesentlichen Strahlung mit einem Richtdiagramm eines entsprechenden, und zwar ganzen Raumwinkels aussendet. Das Maß dieses Raumwinkels ist durch die konstruktiven Abmessungen des Resonanzkörpers dieses Wandlers festgelegt.

Diese vielen, schon seit langer Zeit bekannten Ausführungsformen für die Anbringung des Wandlers haben — bereits zum Teil erörterte — Nachteile verschiedener Art. Die Ausführungsformen mit Übertragungskörper (Fig. 6 der genannten Zeitschrift) sind vor allem auch weniger empfindlich, da der Ultraschall eine nicht unbeträchtliche Wegstrecke durch jeweils ein Medium hindurchläuft, das von den jeweiligen Bedingungen im strömenden Medium nicht beeinflußt wird.

Es ist eine Aufgabe der vorliegenden Erfindung, für einen Durchfluß-Strömungsmesser nach dem Oberbegriff des Patentanspruchs 1 solche zusätzlichen Maßnahmen anzugeben, die die Nachteile des Standes der Technik, wie die Bildung von Strömungshindernissen und/oder von Ablagerungsräumen, vermeiden und/oder Minderungen der Meßempfindlichkeit beseitigen.

Diese Aufgabe wird für den Durchfluß-Strömungsmesser nach dem Oberbegriff des Patentanspruchs 1 erfindungsgemäß mit den Merkmalen des Kennzeichens dieses Patentanspruchs gelöst.

Die Erfindung geht davon aus, solche Wandler für Ultraschall-Strahlung vorzusehen, die von sich aus in einer schrägen Richtung, vorzugsweise in einem Winkel von $\alpha \approx 45°$ Ultraschall aussenden bzw. empfangen können. Die für die Erfindung gemäß dem Anspruchskennzeichen vorgesehenen Wandler für Ultraschall-Strahlung können gemäß einer Weiterbildung sogar der Rohrinnenwandung angepaßt gekrümmt sein. Statt einer Krümmung des ganzen Wandlerkörpers kann auch eine Krümmung allein der Innenfläche dieses Wandlers vorgesehen sein.

Bei einem erfindungsgemäßen Wandler treten keine Brechungseffekte wie bei den nach Fig. 6 der obengenannten Zeitschrift bekannten Anordnungen auf. Zusätzliche Möglichkeit der störungsfreien Fortsetzung der Rohrinnenwand besteht in dem Aufsetzen eines Anpassungsstückes aus Kunststoffmaterial auf dem Wandler, das zum Wandler hin plan und zum Rohrinnern hin zylindrisch konkav (wie die Rohrinnenwand) gekrümmt ist.

Im Gegensatz zu den dem Stand der Technik entsprechenden, oben erwähnten Übertragungskörpern für in Normalenrichtung strahlende Wandler spielen hierbei refraktäre Einflüsse und deren Änderung bei Medien mit unterschiedlicher Schallgeschwindigkeit praktisch keine Rolle. Für die Komponenten der Schallstrahlung, die in zur Rohrachse parallelen Ebenen liegen, wirkt das Anpassungsstück wie eine planparallele Platte. Für Komponenten, die in zur Rohrachse senkrechten Ebenen liegen, sind die Brechungswinkel sehr klein, da der Krümmungsradius des Rohres gegenüber den Wandlerabmessungen groß ist.

Die bei der Erfindung verwendeten einzelnen Wandler haben eine periodische Struktur, die gemäß der Gleichung

$$\lambda = d \cdot \cos \alpha$$

mit $\lambda$ = Wellenlänge im Medium des Rohrinnenraumes und d = Abstand zwischen zwei benachbarten Fingern jeweils eines Kammes der periodischen Interdigitalstruktur, wobei in diesen Abstand jeweils noch ein Finger des gegenüberliegenden Kammes eingreift — zu einer mit dem Winkel $\alpha$ zur Oberfläche des Wandlers schräg gerichteten Abstrahlung von der Oberfläche des Wandlerkörpers führt. Diese periodische Struktur kann eine über die (zur Rohrachse parallele) Länge des Wandlerkörpers alternierende Polarität im Material des Wandlerkörpers sein, wobei die zur Dicke des Wandlerkörpers parallele Polarisation desselben mit dieser Periode alternierend antiparallel gerichtet ist. Eine andere Ausführungsform des Erfindungsprinzips sieht auf der dem Rohrinnenraum abgewandten Oberfläche des Wandlerkörpers eine Interdigitalstruktur als Elektrodenanordnung vor, wobei diese Elektroden-Interdigitalstruktur aus zwei ineinandergreifenden Kammstrukturen mit jeweils Fingern und Sammelschiene besteht. Solche Interdigitalstrukturen sind im übrigen von piezokeramischen Laufzeitanordnungen her zu anderem Zwecke bekannt.

Eine besonders fortschrittliche Lösung gemäß dem Erfindungsprinzip stellt ein Wandler dar, der sowohl periodisch alternierende Polarisation als auch entsprechend periodisch ausgebildete Interdigitalstruktur auf der dem Rohrinnenraum abgewandten Oberfläche des Wandlerkörpers hat. Diese zweifach alternierend ausgebildete Ausführungsform der Erfindung hat bei Anregung mit zwei 90° gegeneinander phasenverschobenen Wechselspannungen eine Sende- und Empfangsrichtung im Winkel $\alpha$ zur Oberfläche, jedoch nur noch in einer einzigen Richtung. Die Periodizität d gemäß obiger Gleichung gilt dort für den Abstand jeweils solcher nächstbenachbarter Finger, zu denen auch sich wiederholende Polarisation gehört.

Eine weitere, besonders fortschrittliche Lösung hat einen Wandler mit einer doppelten Interdigitalstruktur auf der einen Seite des Wandlerkörpers und einheitliche Polarisation des Wandlerkörpers. Die Anregung erfolgt mit vier jeweils 90° phasenversetzten Wechselspannungen, von denen je eine zwischen einer der vier Kammstrukturen der doppelten Interdigitalstruktur und der gemeinsamen Gegenelektrode der Rückseite angelegt ist. Auch dieser Wandler strahlt ebenfalls nur noch in einer Richtung im Winkel $\alpha$ ab.

Weitere Erläuterungen der Erfindung gehen aus der nachfolgenden Beschreibung zu den Figuren hervor.

Fig. 1 und 1a zeigen eine erste Ausführungsform eines der Erfindung gemäßen Wandlers für einen Durchfluß-Strömungsmesser, wobei dieser Wandler eine Interdigitalstruktur hat;

Fig. 2 zeigt eine zweite Ausführungsform mit Periodizität der Polarisation;

Fig. 3 zeigt eine weitere Ausführungsform mit auf beiden Seiten vorhandener Interdigitalstruktur;

Fig. 4 zeigt eine weitere Ausführungsform mit doppelter Interdigitalstruktur;

Fig. 5 zeigt eine Ausführungsform mit sowohl Interdigitalstruktur als auch Periodizität der Polarisation;

Fig. 6 zeigt ein Anpassungsstück und

Fig. 7 und 8 erläutern eine Weiterbildung.

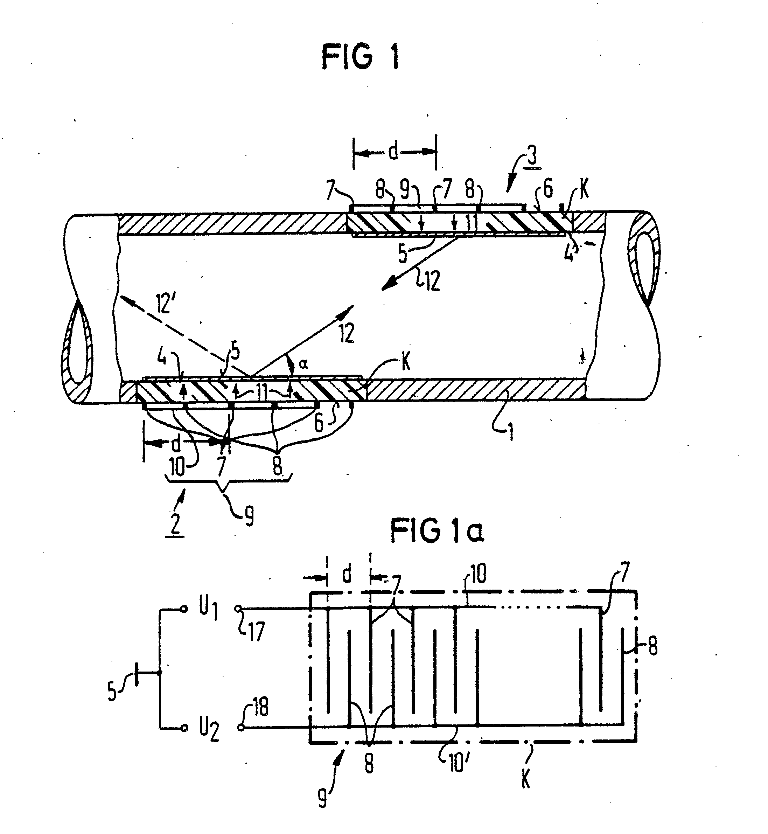

In Fig. 1 ist mit 1 im Schnitt die Rohrleitung bezeichnet, in der das hier nicht dargestellte zu messende Medium strömt und durch dessen Innenraum hindurch Ultraschall in an sich bekannter Weise mit dem Winkel $\alpha$ von einem Wandler 2 zu einem Wandler 3 und zur Differenzbildung von Wandler 3 zum Wandler 2 ausgesendet wird. Der Wandler 2 mit einem plattenförmigen Körper K aus piezoelektrischer Keramik ist in die Wandung des Rohres 1 derart eingebaut, daß die Rohrinnenwandung möglichst kleine Unterbrechung ihrer Form hat. Insbesondere kann die Innenseite 4 des Körpers K des Wandlers 2 der Rohrinnenwandung entsprechende Krümmung haben.

Der Wandler 2 hat auf der Innenseite 4 eine wie für piezokeramische Bauelemente übliche Elektrodenbeschichtung 5, die dem jeweiligen strömenden Medium entsprechend ausreichend resistent ist bzw. durch einen akustisch nicht störenden Überzug geschützt ist. Diese Elektrodenbeschichtung 5 ist vorzugsweise mit dem Rohr als eine Anschlußleitung elektrisch leitend verbunden.

Auf der Außenoberfläche 6 des Wandlers 2 ist eine an sich bekannte Interdigitalstruktur, bestehend aus zwei mit ihren Fingern ineinandergreifenden Kammstrukturen, wobei die Finger einer jeden Kammstruktur mit je einer Sammelschiene verbunden sind. Die in der Darstellung der Fig. 1 geschnitten wiedergegebenen Finger 7 gehören zu der einen Kammstruktur und die Finger 8 gehören zu der anderen Kammstruktur.

Fig. 1a zeigt zur besseren Erläuterung das Schema einer solchen Interdigitalstruktur 9 mit den Fingern 7 und 8 einer jeweiligen Kammstruktur. Mit 10 und 10′ sind die jeweiligen Finger 7 oder 8 miteinander verbindende Sammelschienen bezeichnet.

Mit den Pfeilen 11 ist die permanente Polarisation des piezoelektrischen Keramikmaterials des Wandlers 2 bezeichnet. Diese Polarisationsrichtung kann auch den Pfeilen 11 entgegengerichtet sein, ohne daß sich etwas an der Funktionsweise dieser Ausführungsform nach 1 ändert. Der Wandler 3 kann genau die gleiche Ausführungsform wie der Wandler 2 haben.

Die Abmessung d gibt die Periodizität dieser Interdigitalstruktur an. Es ist deutlich zu erkennen, daß zwischen den jeweils beiden benachbarten Fingern der einen Kammstruktur (7, 10) jeweils ein Finger 8 der anderen Kammstruktur (8, 10′) liegt.

Wie der Übersichtlichkeit halber nur in der Fig. 1a angegeben, wird zwischen dem Anschluß der Kammstruktur der Finger 7 und der Gegenelektrode 5 der Innenseite eine Wechselspannung $U_1$ und zwischen dem Anschluß 18 der anderen Kammstruktur der Finger 8 und der Gegenelektrode 5 eine zweite Wechselspannung $U_2$ angelegt. Die beiden Wechselspannungen $U_1$ und $U_2$ haben die gleiche Ultraschall-Sendefrequenz und -Empfangsfrequenz der Wandler 2 und 3, haben gleiche Amplitude, sind aber gegeneinander 180° phasenverschoben. Diese Bedingung und die oben angegebene Winkelbeziehung mit der Periodizität d liefert eine mit dem Winkel $\alpha$ vom Körper K mit vorgegebener Dicke wie dargestellt abgestrahlte Ultraschall-Strahlung 12 mit zu dem dargestellten Pfeil normaler (bis auf die Randbereiche) ebener Wellenfront. Die gleiche scharfe Richtcharakteristik gilt auch für das Empfangsverhalten der Wandler 2 und 3.

Prinzipiell kann die Interdigitalstruktur 9 auch auf der Rohrinnenseite auf dem Körper des Wandlers 2 bzw. 3 angebracht werden (und die Gegenelektrode 5 auf der Außenseite). Schon aus Gründen der Dauerhaftigkeit der Wandler 2 und 3 ist jedoch die dargestellte Wahl der Seiten für Interdigitalstruktur und Gegenelektrode vorzuziehen.

Lediglich der Vollständigkeit halber sei darauf hingewiesen, daß die in Fig. 1 dargestellte Ausführungsform auch noch in der mit 12′ angegebenen Richtung eine Ultraschall-Welle aussendet, die sich jedoch in dem Rohrinnern totläuft und für die erfindungsgemäße Strömungsmessung keine nutzbringende Bedeutung hat.

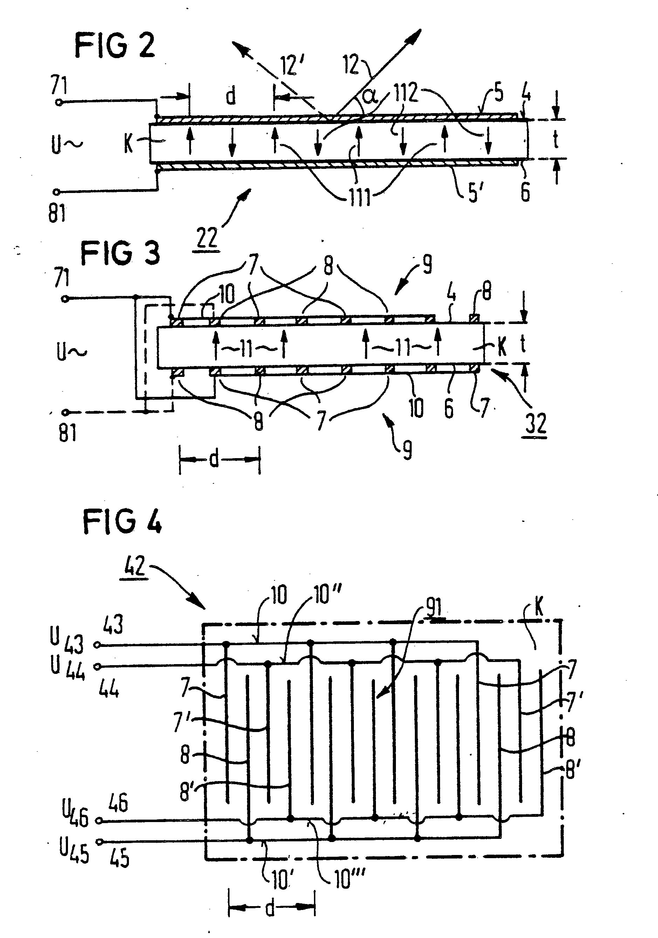

Fig. 2 zeigt in vergrößerter Darstellung nur noch den Wandler 22 in seiner speziellen Ausführungsform für einen Strömungsmesser, wie er anstelle eines Wandlers 2 und 3 in die Rohrwandung einzubauen ist.

Fig. 2 zeigt die Ausführungsform mit alternierender Polarisation im Körper K des Wandlers 22; mit 111 und 112 sind die jeweils entgegengesetzten Polarisationsrichtungen der Gesamtpolarisation des piezokeramischen Körpers K des Wandlers 22 bezeichnet. Eine solche periodische Struktur mit dem Periodizitätsabstand d (zur Erfüllung der obigen Gleichung für die Abstrahlung im Winkel $\alpha$) wird durch vorherige Polarisation mit einer entsprechenden rasterförmigen Elektrode ausgeführt. Mit 5 und 5′ sind ganzflächige Elektrodenbeschichtungen der Oberflächen 4 und 6 des Wandlerkörpers K bezeichnet, wobei bereits oben Einzelheiten zu einer solchen Elektrodenbeschichtung 5 angegeben worden sind. Zwischen diese beiden Elektroden, d. h. an die Anschlüsse 71 und 81 wird eine einzige Anregungs-Wechselspannung $U_\sim$ mit der vorgegebenen Frequenz f angelegt. Die Periodizität der Polarisation 111, 112 sorgt für die geforderte Ultraschall-Abstrahlung im Winkel $\alpha$. Entsprechenden Winkel $\alpha$ hat die Empfangscharakteristik eines solchen Wandlers 22 nach Fig. 2.

Fig. 3 zeigt wieder in vergrößerter Darstellung die spezielle Ausführungsform eines für die Erfindung zu verwendenden Wandlers 32, der ebenso wie die Wandler 2 und 3 in die Rohrleitungswandung 1 einzubauen ist.

Mit 11 ist wiederum die Polarisation des Körpers K dieses Wandlers 32 bezeichnet. Dieser Wandler 32 hat auf seinen beiden Oberflächen seines Keramikkörpers je eine Interdigitalstruktur 9, wie sie in Fig. 1a dargestellt ist, d. h. also auch auf der Rohrinnenseite ist eine solche Interdigitalstruktur vorhanden. Mit 7 und 8 sind wieder die Finger der jeweiligen Kammstruktur mit der einen in der Schnittdarstellung sichtbaren Sammelschiene 10 bezeichnet. Mit d ist wieder die Periodizität gemäß obiger Gleichung angegeben. Wie auch in der Darstellung der Fig. 3 berücksichtigt, sind die Finger 7 der Interdigitalstruktur der einen Oberfläche 4 des Wandlerkörpers mit den gleich bezeichneten Fingern 7 der Interdigitalstruktur der gegenüberliegenden Oberfläche 6 elektrisch verbunden. Es sind somit die unmittelbar gegenüberliegenden Finger 7, 8 mit dem jeweils entgegengesetzten Anschluß 71 bzw. 81 für die Anregungswechselspannung $U_\sim$ miteinander verbunden. Aufgrund dieses um d/2 versetzten Anschlusses der gegenüberliegenden Finger bzw. Kammstrukturen 7 und 8 der Interdigitalstrukturen genügt hier der Anschluß einer einzigen Wechselspannung der vorhergesehenen Anregungsfrequenz f, um die Abstrahlung 12 (und 12′) im Winkel $\alpha$ zur Oberfläche 4, 4′ zu erreichen.

Fig. 4 zeigt eine Ausführungsform eines Wandlers für einen Strömungsmesser, bei der dieser Wandler 42 auf seiner einen Oberfläche eine schematisch dargestellte doppelte Interdigitalstruktur mit der Periodizität d hat. Für die Rückseite des Wandlers 42 genügt als Gegenelektrode eine ganzflächige Metallisierung (wie bei den Beispielen der Fig. 1 und 3).

Wie dargestellt, besteht die doppelte Interdigitalstruktur 91 aus insgesamt vier Kammstrukturen mit je einer Sammelschiene 10, 10′, 10″, 10‴. Die beiden Sammelschienen 10 und 10″ befinden sich auf der einen Randseite der doppelten Interdigitalstruktur. Die Sammelschiene 10 hat die dargestellten Finger 7 und zur Sammelschiene 10″ gehören die dargestellten Finger 7′. Die Finger 7 und 7′ der beiden Kammstrukturen wechseln, wie aus der Fig. 4 ersichtlich, miteinander ab. Interdigital dazu, d. h. in die Kammstrukturen mit den Fingern 7 und 7', greifen die Kammstrukturen mit den Fingern 8 und 8' ein, wobei — wie dargestellt — die Finger 8 mit der Sammelschiene 10' und die Finger 8' mit der Sammelschiene 10''' verbunden sind. Die Anschlüsse der einzelnen Kammstrukturen bzw. der Sammelschienen 10 bis 10''' sind mit 43, 44, 45 und 46 bezeichnet. Zwischen dem Anschluß 43 und der (nicht dargestellten) ganzflächigen Gegenelektrode der Rückseite des Wandlers 42 ist eine erste Wechselspannung $U_{43}$ mit der vorgesehenen Ultraschall-Frequenz f anzulegen. Zwischen dem Anschluß 44 und der erwähnten Gegenelektrode ist eine zweite Wechselspannung $U_{44}$ anzulegen, die gegenüber der Spannung $U_{43}$ +90° Phasenverschiebung hat. Zwischen dem Anschluß 45 und der Gegenelektrode ist eine Wechselspannung $U_{45}$ mit gegenüber $U_{43}$ +180° Phasenverschiebung und zwischen dem Anschluß 46 und der Gegenelektrode ist eine Wechselspannung $U_{46}$ mit gegenüber $U_{43}$ +270° Phasenverschiebung anzuschließen. Diese vier Wechselspannungen $U_{43}$ bis $U_{46}$ haben gleiche Frequenz und gleiche Amplitude. Die permanente Polarisation des Körpers des Wandlers 42 ist in Dickenrichtung desselben im ganzen Körper gleich groß und gleichgerichtet, d. h. einheitlich.

Der Wandler 42 nach Fig. 4 hat zum Vorteil gegenüber den Wandlern nach den Fig. 1 bis 3 nur eine Abstrahlrichtung 12 mit dem Winkel $\alpha$ gemäß der obigen Gleichung. Bei einer Ausführungsform eines Wandlers 42 nach Fig. 4 entfällt die gestrichelt dargestellte, mit 12' bezeichnete weitere Abstrahlrichtung. Bei einer Ausführungsform nach Fig. 4 ist nicht mit Störungen durch in einer Richtung 12' abgestrahlter Ultraschall-Leistung zu rechnen, nämlich mit solchen Rückreflexionen, die von Krümmern, Verschraubungen usw. der Rohrleitung herrühren könnten. Entsprechend hat dieser Wandler nach Fig. 4 auch eine nur einseitige Empfangsempfindlichkeit in allein der Richtung 12. Dieser Wandler ist somit auch unempfindlich gegen Störungen durch mehrfach reflektierten Schall, der in der Rohrleitung stets aus der Richtung 12' einfallen würde.

Der Wegfall der Ausstrahlungsrichtung 12' führt zu einer entsprechenden Verstärkung des Strahles 12 bei gleich großer aufgewendeter elektrischer Wechselspannungs-Leistung und außerdem zu entsprechend erhöhter Empfangsempfindlichkeit.

Fig. 5 zeigt eine weitere Ausführungsform zur Erfindung, wobei der Wandler 52 in seinem piezokeramischen Körper K eine Periodizität der Polarisation und auf einer Seite, wieder vorzugsweise der Außenseite 6 des in das Rohr eingebauten Wandlers 52, außerdem auch eine Interdigitalstruktur 9 nach Fig. 1a hat. Die zu dieser Interdigitalstruktur 9 gehörige alternierende Polarisation ist mit 211 und 212 angegeben. Wichtig ist, zu erkennen, daß benachbarte Finger 7 oder benachbarte Finger 8 der einen bzw. der anderen Kammstruktur im Körper K des Wandlers jeweils einander entgegengesetzte Polarisationsrichtung 211 und 212 haben, und daß erst für den jeweils zweiten Finger 7 oder jeweils zweiten Finger 8 der einen bzw. der anderen Kammstruktur jeweils wieder gleiche Polarisationsrichtung 211 oder 212 vorliegt. Im vorliegenden Fall der Fig. 5 hat die Interdigitalstruktur 9 angepaßt an die alternierende Struktur der angegebenen Polarisation die wie in der Fig. 5 angegebene Periodizität d.

Für die praktische Ausführungsform des Wandlers 52 nach Fig. 5 wie auch für den Wandler 42 nach Fig. 4 bedeutet dies, daß dort für sonst gleiche Verhältnisse bezüglich des Winkels $\alpha$, der Dicke des Körpers des Wandlers, der Anregungsfrequenz f usw. halb so große Abstände zwischen den benachbarten Fingern 7 und 8 (bzw. 7, 7' und 8, 8' nach Fig. 4) der ganzen Interdigitalstruktur bzw. zwischen den Fingern 7, 7' oder zwischen den Fingern 8, 8' der jeweiligen Kammstruktur vorliegen. Die herzustellende Interdigitalstruktur der Wandler 42 und 52 nach Fig. 4 und 5 erfordert also doppelt so hohe Auflösung der Finger 7, 7', 8 und 8'.

Zum Anschluß der Interdigitalstruktur 9 des Wandlers 52 sind die Finger 7 mit einem Anschluß und die Finger 8 mit einem zweiten gemeinsamen Anschluß 54 verbunden, und es sind zur Anregung des Wandlers 52 die beiden frequenz- und amplitudengleichen Wechselspannungen $U_{11}$ und $U_{12}$, wie dargestellt, anzulegen, wobei jedoch $U_{11}$ und $U_{12}$ (im Gegensatz zu Fig. 1, 1a) nur 90° Phasenverschiebung gegeneinander zu haben brauchen. Die 90° Phasenverschiebung hat den Vorteil, daß eine solche Phasenverschiebung elektronisch in einfacher Weise mit einem Kondensator erzeugt werden kann.

Auch der Wandler 52 nach Fig. 5 hat nur eine Abstrahlrichtung 12 mit dem Winkel $\alpha$ gemäß der obigen Gleichung, so daß hier wieder das zu Fig. 4 gesagte gilt.

Fig. 6 zeigt eine Ausschnitts-Ansicht eines wie bereits oben erwähnte Anpassungsstückes 61, wie es für den Wandler 2 (wie dargestellt) auch für alle übrigen Wandler 3, 22, 32, 42 und 52 bei ebenem Wandlerkörper mit gleichem Vorteil zu verwenden ist. Das Bezugszeichen 1 weist auf das Rohr hin.

Aus der obigen Bedingung d · $\lambda/\cos\alpha$ ergibt sich

$$\alpha = \arccos \frac{c}{f \cdot d}$$

mit c = Schallgeschwindigkeit und f = Frequenz der anregenden Spannung U.

Ein weiterer Vorteil der beschriebenen Wandler ist daß durch bloße Frequenzänderung der Anregungs-Wechselspannung(en) U der Abstrahlwinkel, d. h. der Winkel $\alpha$ der Richtung 12, elektrisch nachjustiert bzw. gesteuert werden kann. Dies ist nicht nur für ungenauen ursprünglichen Einbau, sondern auch für beispielsweise temperaturbedingte Änderung des Brechungsindex des strömenden Mediums wichtig. Es kann bei der Erfindung z. B. eine einfache automatische Nachstimmung auf die Optima von Aussenden und Empfangen vorgesehen werden. Im Optimum gilt die Beziehung

$$c = d \cdot f \cdot \cos\alpha$$

mit konstruktiv vorgegebenem d und $\alpha$. Das heißt, daß der Wert der Schallgeschwindigkeit $c \sim f$ ist und aus dem Wert f ermittelt werden kann.

Der Wert c der Schallgeschwindigkeit wird in der endgültigen (für Ultraschall-Strömungsmesser bekannten) zahlenmäßigen Auswertung benötigt und ergibt sich hier in einfacher Weise.

Gibt man gemäß einer weiteren Ausgestaltung der Erfindung dem Wandlerkörper eine Dicke t, die gleich der halben Wellenlänge der akustischen Welle im Material des Wandlerkörpers ist, die dort durch elektrische Anregung mit der Wechselspannung der Frequenz f erzeugt wird, so wird eine Dickenresonanzschwingung des Wandlerkörpers erzeugt.

Zu dem Frequenzwert f dieser Resonanzschwingung ist zu bemerken, daß dieser Wert bei einem Wandlerkörper mit Interdigitalstruktur der Polarisation und/oder der Elektroden für eine gegebene Dicke t des Wandlerkörpers niedriger ist als die Dickenresonanzfrequenz eines üblichen plattenförmigen Wandlerkörpers gleicher Dicke t ohne Interdigitalstruktur. Bei einem solchen Wandlerkörper mit Interdigitalstruktur ist bei vorgegebener Frequenz f der Wert der Dicke t, bei der dieser Körper in Dickenresonanz schwingt, größer als derjenige für Resonanz einer üblichen Platte ohne eine solche Struktur. Der Grund hierfür ist, daß im Betrieb dieser Wandlerkörper mit Interdigitalstruktur als ein aus in Richtung parallel zu den Fingerelektroden bzw. parallel zu den Streifen der Polarisation dieses Wandlerkörpers benachbarten Streifen bzw. benachbarten Teilvolumina zusammengesetzt gedacht werden kann, die der alternierenden elektrischen Anregung oder der räumlich alternierenden permanenten Polarisation des Wandlerkörpers entsprechend ausgedehnt sind. Jeweils benachbarte Teilvolumina des Wandlerkörpers mit Interdigitalstruktur schwingen phasenentgegengesetzt, d. h. ein sich in Dickenrichtung augenblicklich kontrahierendes Teilvolumen befindet sich zwischen zwei angrenzenden Teilvolumina, die in diesem Augenblick gerade eine Dilatation, und zwar im wesentlichen in Richtung auf das sich gerade kontrahierende benachbarte Teilvolumen ausdehnen. Die Dilatation findet also hier einen wesentlich geringeren materialinternen, dieser Ausdehnung entgegengerichteten Widerstand der jeweiligen Nachbarteilvolumina vor, was einer Verringerung der an sich materialgegebenen Steifigkeit entspricht. Bei einem Wandlerkörper mit Interdigitalstruktur nach der Erfindung kann sich somit die Poisson'sche Querkontraktion weitgehend auswirken.

Eine weitere Ausgestaltung der Erfindung sieht vor, im Wandlerkörper alternativ eine Resonanzschwingung eines solchen Schwingungsmode zu erzeugen, bei dem die die mechanische Resonanzfrequenz bestimmende Größe gleich dem Wert d/2 ist. Dieser Wert d/2 entspricht der Breite eines einzelnen Streifens mit in sich gleichgerichteter permanenter Polarisation bzw. mit in sich jeweils gleichphasiger elektrischer Anregung. Ein solcher Streifen der Breite d/2 kann hier weitgehend als einzelner Resonanzkörper betrachtet werden.

Diese Weiterbildungen der Erfindung sehen somit die alternative Verwendung zweier verschiedener Resonanzschwingungsmoden — bezogen auf die Dicke t oder bezogen auf die Abmessung d/2 des Wandlerkörpers — vor. Die Ausnutzung einer dieser Resonanzen des Wandlerkörpers ist insoweit vorteilhaft, als in Resonanz mit schon geringerer elektrischer Anregung vergleichsweise große Amplituden der im Winkel $\alpha$ abgestrahlten Ultraschall-Strahlung erzeugt wird.

Die für die Resonanz vorzusehende Dicke t einer piezokeramischen Platte läßt sich mathematisch als Funktion der Frequenz f angeben. Viel einfacher ist es jedoch, für den praktischen Anwendungsfall den Wert der Dicke t oder der Periode d für vorgegebene Frequenz f durch einfachen Versuch zu ermitteln. Ein an einem Einzelstück ermittelter Wert gilt dann für die ganze Produktionsserie. Sollte im Einzelfall die Dicke t oder die Abmessung d vorgegeben sein, so ist entsprechend der Frequenzwert f bis zum Auftreten der einen oder der anderen Resonanz zu variieren, für die sich dann ein entsprechender Winkel $\alpha$ ergibt (der dann auch für die Anordnung des zweiten (Empfangs-)Wandlers gilt.

Mit einer Resonanz ist zwangsläufig auch eine Phasendrehung um 180° verbunden. Dies ist nachteilig, wenn sich die Anregungsfrequenz und die material- und konstruktionsbedingte Resonanzfrequenz gegenseitig einander verschieben bzw. zwangsläufig verschoben werden müssen. Zum Beispiel wird eine Verschiebung der Frequenz f der elektrischen Anregungsspannung dann notwendig, wenn — um einen konstanten Winkel $\alpha$ einzuhalten — das in der Rohrleitung zu messende strömende Medium ausgewechselt wird, z. B. Benzin gegen Öl und/oder eine Temperaturänderung des strömenden Mediums eintritt. Dies ist aber für die Resonanzschwingung nach der vorliegenden Erfindung unproblematisch, wenn der Durchflußmesser für ein bestimmtes Medium, z. B. allein für Wasser, bestimmt ist, wobei vorteilhafterweise die Tatsache begünstigend ins Gewicht fällt, daß die Schallgeschwindigkeit in Wasser relativ wenig temperaturabhängig ist. Ein solcher nach der vorliegenden Erfindung weiter ausgestalteter Strömungsmesser kann also nicht nur vorteilhaft allein für kaltes oder warmes Wasser verwendet werden, sondern er ist auch mit ausreichender Meßgenauigkeit für die Strömungsmessung von wechselnd warmem und kaltem Wasser verwendbar.

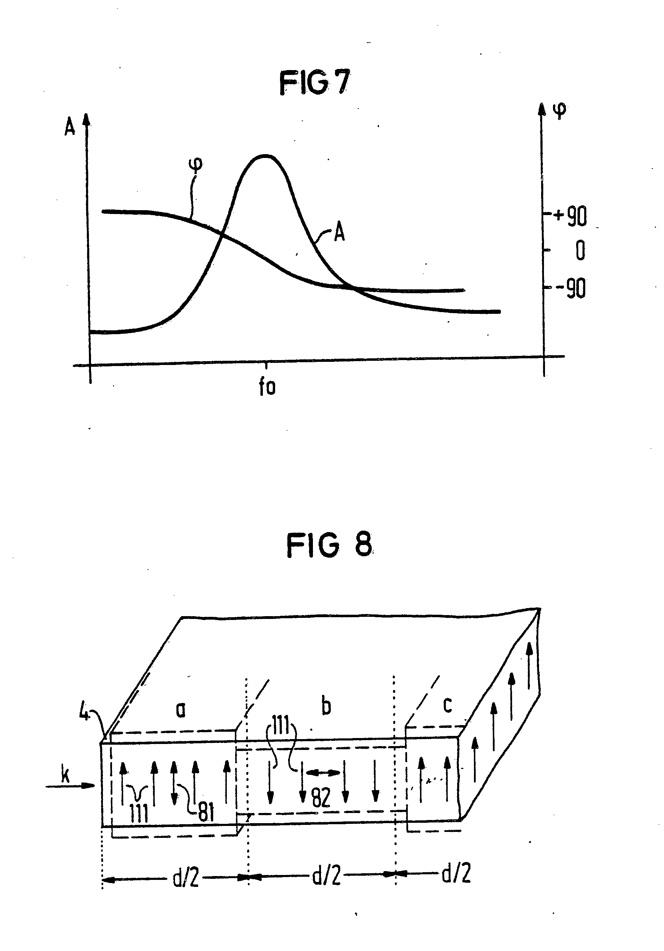

Das Diagramm der Fig. 7 enthält auf der Abszisse die Frequenz mit dem Wert $f_0$ für die Resonanzfrequenz. Der Wert $f_0$ der Resonanzfrequenz entspricht der gewählten Dicke t oder der Abmessung d/2 des Wandlerkörpers. Sie ist dann gleich der durch den vorgegebenen Winkel $\alpha$ bedingten Frequenz der anregenden, an den Wandler anliegenden Wechselspannung. Auf der in der Fig. 7 linken Ordinate ist die Amplitude A in beliebigen Einheiten und auf der rechten Ordinate ist die Phase $\varphi$ aufgetragen. Die frequenzabhängige Amplitude der Ultraschall-Schwingung des Wandlerkörpers K gibt die Kurve A des Diagramms wieder und die zugehörige Phase zeigt die Kurve $\varphi$.

Aus der Fig. 7 ist ersichtlich, welcher Gewinn an Wirkungsgrad bezüglich der Erzeugung abzustrahlender Ultraschall-Energie erreichbar ist. Sie zeigt darüber hinaus auch, in welchen möglichen Grenzen und mit welcher Auswirkung eine Verschiebung der Frequenz der anregenden elektrischen Wechselspannung im Bereich einer Resonanz des Wandlerkörpers K zu beachten ist.

Erläuternd zur Querkontraktion zeigt Fig. 8 — jedoch perspektivisch und nur als Ausschnitt — einen Wandlerkörper K wie in Fig. 2, hier jedoch ohne die Elektroden 5 und 5'. Mit 111 ist wie in Fig. 2 auf die Polarisation hingewiesen. Es ist zu erkennen, daß einander benachbart streifen- bzw. balkenförmige Teilvolumina a, b, c ... vorliegen, innerhalb derer einheitliche Polarisation 111 vorliegt, wohingegen z. B. das Teilvolumen b dem Teilvolumen a (und dem Teilvolumen c) entgegengesetzte Richtung der permanenten Polarisation 111 hat. Bei elektrischer Anregung durch Anlegen der Wechselspannung an die nur in Fig. 2 dargestellten Elektroden 5 und 5' ergibt sich z. B. in der einen Halbwelle der anliegenden Wechselspannung für das Teilvolumen a eine Dilatation in Richtung des Doppelpfeils 81, auf die auch durch die gestrichelten Abgrenzungen hingewiesen ist. In der gleichen Halbwelle ergibt sich wegen entgegengesetzt gerichteter Polarisation 111 für das Teilvolumen b eine Dilatation in Richtung des Doppelpfeils 82, d. h. parallel zum Doppelpfeil 81 ergibt sich eine Kontraktion. Die senkrechten punktierten Linien weisen auf die Grenzen d/2 zwischen den Teilvolumina a, b und c bei Null-Durchgang der Wechselspannung und im betriebslosen Zustand hin. Aus Fig. 8 ist zu erkennen, wie sich in dem schraffiert wiedergegebenen Bereich die Dilatation des Teilvolumens b sich in die kontrahierenden Teilvolumina a und c ausdehnt. In der folgenden Halbwelle der Wechselspannung sind die Verhältnisse des Teilvolumens b einerseits und der Teilvolumina a und c andererseits gegeneinander vertauscht.

**Patentansprüche**

1. Durchfluß-Strömungsmesser für Rohre mit zwei Ultraschall-Wandlern mit die Innenwand des Rohres wenigstens weitgehend ungestört fortsetzenden Wandlerkörpern mit Elektroden und Anschlüssen zum Anlegen von Anregungswechselspannung zum jeweiligen Aussenden und zum jeweiligen Empfangen bezüglich der Rohrachse schräg in einem Winkel $\alpha$ durch das in der Rohrleitung strömende Medium gerichteter Ultraschall-Strahlung, wobei aus dem Unterschied zwischen der in der Strömungsrichtung empfangenen Ultraschall-Strahlung und der entgegen der Strömungsrichtung empfangenen Ultraschall-Strahlung ein Maß für die Durchflußmenge und/oder Durchflußgeschwindigkeit abgeleitet wird, gekennzeichnet dadurch, daß die Ultraschall-Wandler mit Interdigitalstruktur (9, 91) der Elektroden auf wenigstens einer der Flächen (4, 6) des jeweiligen Wandlerkörpers (K) und/oder mit Interdigitalstruktur der Polarisation (111, 112; 211, 212) des Wandlerkörpers (K) versehen sind, wobei die Periodizität d der Interdigitalstruktur die Bedingung

$$d = \lambda/\cos\alpha$$

erfüllt, in der d die Periodizität der Interdigitalstruktur (9, 91) der Elektroden und/oder der Periodizität der Polarisation (111, 112; 211, 212) des Wandlerkörpers (K) und $\lambda$ die Wellenlänge im strömenden Medium im Rohrinnern ist, und dadurch, daß die Anregungswechselspannung(en) ($U_1$, $U_2$; $U_\sim$; $U_{43}$ bis $U_{46}$; $U_{11}$, $U_{12}$) mit vom Winkel $\alpha$ und der Periodizität d gegebener Frequenz f vorgesehen sind.

2. Durchfluß-Strömungsmesser nach Anspruch 1, gekennzeichnet dadurch, daß die Dicke des Wandlerkörpers (K) kleiner als eine halbe Wellenlänge der Ultraschall-Strahlung im Material des Wandlerkörpers (K) ist.

3. Durchfluß-Strömungsmesser nach Anspruch 1 oder 2, gekennzeichnet dadurch, daß die Interdigitalstruktur allein durch eine mit der Periodizität (d) in Richtung der Dicke des Wandlerkörpers (K) alternierende Polarisation (111, 112) gebildet ist (Fig. 2).

4. Durchfluß-Strömungsmesser nach Anspruch 1 oder 2, gekennzeichnet dadurch, daß sowohl eine Interdigitalstruktur der Polarisation mit in Richtung der Dicke des Wandlerkörpers (K) alternierender Polarisationsrichtung (211, 212) als auch eine interdigitale Elektrodenstruktur (9) vorgesehen ist, wobei die beiden Strukturen zusammengenommen die gleiche Periodizität d haben und die Finger (7) der einen Kammstruktur untereinander und die Finger (8) der anderen Kammstruktur untereinander jeweils gleich große Abstände der Abmessung d/2 haben (Fig. 5).

5. Durchfluß-Strömungsmesser nach Anspruch 1 oder 2, gekennzeichnet dadurch, daß die Interdigitalstruktur allein durch eine oder mehrere interdigitale Elektrodenanordnungen (9, 91) gebildet ist (Fig. 1, 3, 4).

6. Durchfluß-Strömungsmesser nach Anspruch 5, gekennzeichnet dadurch, daß auf beiden Seiten (4, 6) des Wandlerkörpers (K) je eine Interdigitalstruktur (9) vorgesehen ist, die jede für sich die Periodizität d haben und die beide

um d/2 gegeneinander verschoben sind.

7. Durchfluß-Strömungsmesser nach Anspruch 5, gekennzeichnet dadurch, daß auf der einen Seite des Wandlerkörpers (K) eine doppelte Interdigitalstruktur (91) mit je zwei Kammstrukturen (7, 7'; 8, 8') vorgesehen ist, an die gegenüber der ganzflächigen Gegenelektrode (5) der anderen Seite des Wandlerkörpers (K) je eine von vier Wechselspannungen mit je 90° Phasenverschiebung anzulegen sind, und dadurch, daß die Periodizität d durch den Abstand jeweils zweier benachbarter Finger einer jeweils einzigen der insgesamt vier Kammstrukturen gegeben ist (Fig. 4).

8. Durchfluß-Strömungsmesser nach einem der Ansprüche 1, 2, 3, 4, 5 und 6, gekennzeichnet dadurch, daß die ganzflächige Gegenelektrode (5) auf der beim eingebauten Wandler dem Rohrinnern zugewandten Oberfläche (4) des Wandlerkörpers (K) angeordnet ist.

9. Durchfluß-Strömungsmesser nach einem der Ansprüche 1 bis 8, gekennzeichnet dadurch, daß die beim eingebauten Wandler (2, 3, 22, 32, 42, 52) dem Innenraum des Rohres (1) zugewandte Oberfläche (4) des Wandlerkörpers (K) eine derartige zylindrische Krümmung aufweist, daß diese innere Oberfläche (4) des Wandlerkörpers (K) die Rohrinnenwandung fortsetzt.

10. Durchfluß-Strömungsmesser nach einem der Ansprüche 1 bis 8, gekennzeichnet dadurch, daß auf der zum Innenraum des Rohres (1) zugewandten Oberfläche (4) des Wandlerkörpers (K) ein Anpassungsstück (61) aufgesetzt ist, dessen dem Innenraum des Rohres (1) zugewandte Oberfläche zylindrisch gekrümmt ist (Fig. 6).

11. Durchfluß-Strömungsmesser nach einem der Ansprüche 1 bis 10, dadurch gekennzeichnet, daß am Wandlerkörper (K) eine solche Abmessung vorgesehen ist, mit der die bei gegebener Frequenz (f) vorliegende betriebsgemäße Schwingung in diesem Wandlerkörper (K) eine Resonanzschwingung desselben ist.

12. Durchfluß-Strömungsmesser nach Anspruch 11, gekennzeichnet dadurch, daß diese Abmessung die Dicke (t) des Wandlerkörpers (K) und die Resonanzschwingung die zugehörige Dickenschwingung des Wandlerkörpers (K) mit Interdigitalstruktur ist.

13. Durchfluß-Strömungsmesser nach Anspruch 11, gekennzeichnet dadurch, daß diese Abmessung gleich dem Wert d/2 der Periodizität der Interdigitalstruktur des Wandlerkörpers ist und die Resonanzschwingung die zugehörige Querkontraktionsschwingung im Wandlerkörper (K) ist.

14. Verfahren zum Betrieb eines Wandlers in einem Durchfluß-Strömungsmesser nach einem der Ansprüche 1 bis 13, gekennzeichnet dadurch, daß durch steuerbare Veränderung der Frequenz f der Anregungswechselspannung(en) ($U_1$, $U_2$; $U_\sim$; $U_{43}$ bis $U_{46}$, $U_{11}$, $U_{12}$) der Winkel $\alpha$ der Ultraschall-Abstrahlung (12) steuerbar verändert werden kann und/oder sich durch (temperaturbedingte) Änderungen des Brechungsindex des in der Rohrleitung (1) strömenden Mediums ergebende Änderungen des Winkels $\alpha$ nachgeregelt werden.

**Claims**

1. A flowmeter for pipelines containing two ultrasonic transducers with transducer bodies which form substantially undisturbed parts of the inner wall of the pipeline, with electrodes and terminals for the connection of an exciting a. c. voltage for the transmission and for reception of ultrasonic radiation directed obliquely relative to the pipeline axis at an angle $\alpha$ through the medium flowing in the pipeline, where a gauge of the quantity of flow and/or the speed of flow is derived from the difference between the ultrasonic radiation received in the direction of flow and the ultrasonic radiation received counter to the direction of flow, characterised in that the ultrasonic transducers are provided with an interdigitated structure (9, 91) of electrodes on at least one of the surfaces (4, 6) of the respective transducer body (K) and/or with an interdigitated structure of the polarisation (111, 112; 211, 212) of the transducer body (K), where the periodicity d of the interdigitated structure fulfils the condition

$$d = \lambda/\cos\alpha$$

in which d is the periodicity of the interdigitated structure (9, 91) of the electrodes and/or the periodicity of the polarisation (111, 112; 211, 212) of the transducer body (K), and $\lambda$ is the wavelength in the flowing medium in the pipeline interior, and in that the frequency f of the exciting a. c. voltage(s) ($U_1$, $U_2$; $U_\sim$; $U_{43}$ to $U_{46}$; $U_{11}$, $U_{12}$) is governed by the angle $\alpha$ and the periodicity d.

2. A flowmeter as claimed in Claim 1, characterised in that the thickness of the transducer body (K) is less than half a wavelength of the ultrasonic radiation in the material of the transducer body (K).

3. A flowmeter as claimed in Claim 1 or 2, characterised in that the interdigitated structure is formed solely by a polarisation (111, 112) which alternates with the periodicity (d) in the direction of the thickness of the transducer body (K) (Figure 2).

4. A flowmeter as claimed in Claim 1 or 2, characterised in that there is provided both an interdigitated structure of the polarisation with a polarisation direction (211, 212) which alternates in the direction of the thickness of the transducer body (K), and also an interdigitated electrode structure (9), where the two structures, taken together, posses the same periodicity (d) and the fingers (7) of the first comb structure and the fingers (8) of the other comb structure are in each case mutually spaced by equal dimensions of d/2 (Figure 5).

5. A flowmeter as claimed in Claim 1 or 2, characterised in that the interdigitated structure is formed solely by one or more interdigitated electrode arrangement (9, 91) (Fig. 1, 3, 4).

6. A flowmeter as claimed in Claim 5, characterised in that on both sides (4, 6) of the transducer body (K) there is arranged an interdigitated structure (9), both of which independently possess the periodicity (d) and are mutually displaced by d/2.

7. A flowmeter as claimed in Claim 5, characterised in that on one side of the transducer body (K) there is arranged a double interdigitated structure (91) provided with two comb structures (7, 7'; 8, 8') opposite the whole-surface counter electrode (5) on the other side of the transducer body (K), to be connected to one of four a. c. voltages each displaced in phase by 90°, and in that the periodicity (d) is governed by the interval between two adjacent fingers of one of the total of four comb structures (Figure 4).

8. A flowmeter as claimed in one of the Claims 1, 2, 3, 4, 5 and 6, characterised in that the whole-surface counter electrode (5) is arranged on that surface (4) of the transducer body (K) which faces towards the interior of the pipeline when the transducer is installed.

9. A flowmeter as claimed in one of the Claims 1 to 8, characterised in that the surface (4) of the transducer body (K) which faces towards the interior of the pipeline (1) when the transducer (2, 3, 22, 32, 42, 52) is installed exhibits a cylindrical curvature such that this inner surface (4) of the transducer body (K) continues the inner wall of the pipeline.

10. A flowmeter as claimed in one of the Claims 1 to 8, characterised in that on the surface (4) of the transducer body (K) which faces towards the interior of the pipeline (1) there is positioned a matching component (61) whose surface which faces towards the interior of the pipeline (1) is cylindrically curved (Figure 6).

11. A flowmeter as claimed in one of the Claims 1 to 10, characterised in that the transducer body (K) is provided with a dimension such that the operational oscillation in this transducer body (K) at a given frequency (f) is a resonance oscillation thereof.

12. A flowmeter as claimed in Claim 11, characterised in that this dimension in the thickness (t) of the transducer body (K) and the resonance oscillation is the associated thickness oscillation of the transducer body (K) with an interdigitated structure.

13. A flowmeter as claimed in Claim 11, characterised in that this dimension is equal to the value d/2 of the periodicity of the interdigitated structure of the transducer body, and the resonance oscillation is the associated lateral contraction oscillation in the transducer body (K).

14. A process for operating a transducer in a flowmeter as claimed in one of the Claims 1 to 13, characterised in that by varying the frequency f of the exciting a. c. Voltage(s) ($U_1$, $U_2$; $U_\sim$; $U_{43}$ to $U_{46}$; $U_{11}$, $U_{12}$) in a controllable manner it is possible to change the angle $\alpha$ of the ultrasonic radiation (12) in a controllable manner and/or to regulate changes in the angle $\alpha$ which result from (temperature-related) changes in the index of refraction of the medium flowing in the pipeline (1).

## Revendications

1. Débitmètre à ultrasons pour des conduites, comportant deux transducteurs à ultrasons comprenant des corps transducteurs, prolongeant la paroi intérieure de la conduite au moins largement sans discontinuité, comportant des électrodes et des bornes pour l'application d'une tension alternative d'excitation pour l'émission respective et pour la réception respective d'un rayonnement ultrasonore dirigé obliquement par rapport à l'axe de la conduite, en formant un angle $\alpha$, dans le milieu circulant dans la conduite tubulaire, une mesure de débit et/ou de la vitesse d'écoulement étant dérivée de la différence entre le rayonnement ultrasonore ruçu dans le sens d'écoulement et le rayonnement ultrasonore reçu dans le sens opposé au sens d'écoulement, caractérisé par le fait que les transducteurs à ultrasons sont munis d'une structure interdigitée (9, 91) des électrodes sur au moins une des surfaces (4, 6) du corps transducteur respectif (K) et/ou d'une structure interdigitée de la polarisation (111, 112; 211, 212) du corps transducteur, la périodicité d de la structure interdigitée remplissant la condition:

$$d = \lambda/\cos\alpha$$

dans laquelle d est la périodicité de la structure interdigitée (9, 91) des électrodes et/ou la périodicité de la polarisation (111, 112; 211, 212) du corps transducteur (K) et $\lambda$ est la longueur d'onde dans l'agent qui circule à l'intérieur de la conduite, et que la (les) tension(s) alternative(s) d'excitation ($U_1$, $U_2$; $U_\sim$; $U_{43}$ à $U_{46}$; $U_{11}$, $U_{12}$) présente(nt) l'angle et la fréquence f donnée par la périodicité d.

2. Débitmètre suivant la revendication 1, caractérisé par le fait que l'épaisseur de corps transducteur (K) est plus faible qu'une demie longueur d'onde du rayonnement ultrasonore dans le matériau du corps transducteur (K).

3. Débitmètre suivant la revendication 1 ou 2, caractérisé par le fait que la structure interdigitée est seulement formée par une polarisation (111, 112) alternée suivant la direction de l'épaisseur du corps transducteur (K) avec la périodicite (d) (figure 2).

4. Débitmètre suivant la revendication 1 ou 2, caractérisé par le fait qu'il est prévu aussi bien une structure interdigitée de la polarisation avec une direction de polarisation (211, 212) alternée suivant la direction de l'épaisseur du corps transducteur (K) qu'une structure d'électrodes interdigitée (9), les deux structures assemblées possédant la même périodicité (d) et les doigts (7) d'une des structures en peigne ainsi que les doigts (8) de l'autre structure en peigne présentant respectivement entre eux des écarts de même valeur de dimension d/2 (figure 5).

5. Débitmètre suivant la revendication 1 ou 2, caractérisé par le fait que la structure interdigitée est formée seulement par un ou plusieurs agencements d'électrodes interdigités (9, 91) (figures 1, 3, 4).

6. Débitmètre suivant la revendication 5, caractérisé par le fait qu'il est respectivement prévu des deux côtés (4, 6) du corps transducteur (K) une structure interdigitée (9), structures qui présentent chacune pour soi la périodicité (d) et qui sont toutes deux décalées l'une par rapport à l'autre de d/2.

7. Débitmètre suivant la revendication 5, caractérisé par le fait qu'un côté du corps transducteur (K) il est prévu une structure interdigitée double (91) comportant respectivement deux structures en peigne (7, 7'; 8, 8') auxquelles doit être respectivement appliquée, par rapport à la contre-électrode (5) occupant toute la surface de l'autre côté du corps transducteur (K), une de quatre tensions alternatives présentant respectivement un déphasage de 90°, et par le fait que la périodicité (d) est donnée par la distance existant respectivement entre deux doigts voisins de respectivement une seule de l'ensemble des quatre structures en peigne (figure 4).

8. Débitmètre suivant l'une des revendications 1, 2, 3, 4, 5 et 6, caractérisé par le fait que la contre-électrode (5) occupant toute la surface est disposée sur la surface (4) du corps transducteur (K) qui est tournée vers l'intérieur de la conduite lorsque le transducteur est monté.

9. Débitmètre suivant l'une des revendications 1 à 8, caractérisé par le fait que la surface (4) du corps transducteur (K) qui est tournée vers l'espace intérieur de la conduite (1) lorsque le transducteur (2, 3, 22, 32, 42, 52) est monté présente une courbure cylindrique telle que cette surface intérieure (4) du corps transducteur (K) prolonge la paroi intérieure de la conduite.

10. Débitmètre suivant l'une des revendications 1 à 8, caractérisé par le fait que sur la surface (4) du corps transducteur (K) qui est tournée vers l'espace intérieur de la conduite (1) est montée une pièce adaptatrice (61) dont la surface qui est tournée vers l'espace intérieur de la conduite (1) est incurvée cylindriquement (figure 6).

11. Débitmètre suivant l'une des revendications 1 à 10, caractérisé par le fait qu'il est prévu sur le corps transducteur (K) une dimension telle que l'oscillation en fonctionnement existant pour la fréquence donnée (f) dans ce corps transducteur (K) est la même qu'une oscillation de résonance.

12. Débitmètre suivant la revendication 11, caractérisé par le fait que cette dimension est l'épaisseur (t) du corps transducteur (K) et que l'oscillation de résonance est l'oscillation d'épaisseur associée du corps transducteur (K) comportant une structure interdigitée.

13. Débitmètre suivant la revendication 11, caractérisé par le fait que cette dimension est égale à la valeur d/2 de la périodicité de la structure interdigitée du corps transducteur et que l'oscillation de résonance est l'oscillation de construction transversale associée dans le corps transducteur (K).

14. Procédé pour l'utilisation d'un transducteur dans un débitmètre suivant l'une des revendications 1 à 13, caractérisé par le fait que l'angle $\alpha$ du rayonnement ultrasonore (12) peut être modifié de façon commandable et/ou des variations de l'angle $\alpha$, provoquées par des variations (dues à la température) de l'indice de réfraction du milieu qui circule dans la conduite tubulaire (1), peuvent être réglées ultérieurement en faisant varier de façon commandable la fréquence f de la (des) tension(s) alternative(s) ($U_1$, $U_2$; $U_\sim$; $U_{43}$ à $U_{46}$; $U_{11}$, $U_{12}$).

# FIG 1

# FIG 1a

# FIG 2

# FIG 3

# FIG 4

# FIG 5

# FIG 6

# FIG 7

# FIG 8